# EUROPÄISCHE PATENTSCHRIFT

(11) **EP 1 293 119 B1**
(45) Veröffentlichungstag und Bekanntmachung des Hinweises auf die Patenterteilung: **26.01.2005**
(21) Anmeldenummer: 02015407.6
(22) Anmeldetag: 11.07.2002
(51) Int. Cl.: A01G 17/12

(54) **Gurtband zur Sicherung von Bäumen und sonstigen pflanzlichen Strukturen**
Strap for securing trees and other plant structures
Sangle pour consolider des arbres et d'autres structures végétales

(30) Priorität: 17.09.2001 DE 20115343 U
(43) Veröffentlichungstag der Anmeldung: 19.03.2003
(73) Patentinhaber: Sinn, Günter, 61118 Bad Vilbel (DE); Sinn, Anna, 61118 Bad Vilbel (DE)
(72) Erfinder: Sinn, Günter, 61118 Bad Vilbel (DE)
(74) Vertreter: Ratzel, Gerhard, Dr.

(56) Entgegenhaltungen:
- EP-A- 0 623 277
- DE-U- 9 211 619
- DE-U- 20 115 343
- GB-A- 2 190 931
- US-A- 4 852 299
- GÜNTER SINN: NEUE LANDSCHAFT, Bd. 34, September 1989 (1989-09), Seiten 592-594, XP0008024930 BERLIN, DE
- PATENT ABSTRACTS OF JAPAN Bd. 1998, Nr. 08, 30. Juni 1998 (1998-06-30) & JP 10 066457 A (SEIWA:KK), 10. März 1998 (1998-03-10)
- GÜNTER SINN: "Neue Erkenntnisse zur Baumpflege und Baumsanierung" DAS GARTENAMT, Bd. 40, Februar 1991 (1991-02), Seiten 101-104, XP0008024932 HANNOVER, DE

## Beschreibung

Die vorliegende Erfindung bezieht sich auf ein Gurtband zur Sicherung von pflanzlichen Strukturen, insbesondere von Großgehölzen, beispielsweise von Bäumen, vorzugsweise deren Kronen.

Bezüglich der Sicherung von pflanzlichen Strukturen, insbesondere Kronensicherungssystem zur Verkehrssicherheit von Bäumen wurden in der Vergangenheit mehrfach der Fachwelt Vorschläge unterbreitet.

So beschreibt die Europäische Patentschrift EP-A-0623277 ein Seilverbindungssystem, wobei ein Seil aus einem durch Stauchung verkürzbaren und sich dabei verdickenden, aus Strängen geflochteten Schlauchgeflecht besteht, bei dessen Stauchung ein freier Innenkanal entsteht, der größer ist als der Seilaußendurchmesser in ungestauchtem Zustand, wobei die Flechtung so locker ist, dass zumindest im gestauchten Zustand zwischen den Strängen Maschen entstehen, die zumindest auf die Größe des Seilaußendurchmessers aufweitbar sind und ferner das Seil durch Schlauchspleißung an beliebiger Stelle zu einer Schlaufe formbar ist und die Schlaufe als schlauchförmige flache Bandage einstellbarer Größe um ein Baumelement herum formbar ist, in deren Bereich ein Spreizband in das Seil eingeschoben ist. In der Einleitung der Beschreibung dieser Europäischen Patentschrift EP-A-0623277 sind mehrere Schutzrechts-Literaturstellen des Standes der Technik genannt.

Zum Stand der Technik ist ferner auf den Aufsatz von Herrn Günter Sinn mit dem Titel "Ein neues Kronensicherungssystem zur Verkehrssicherheit von Bäumen" veröffentlicht auf Seite 592 ff der Septemberausgabe 1989 der Fachzeitschrift "Neue Landschaft" hinzuweisen, in welcher ein Gurtband aus synthetischen Fasern, insbesondere aus Polyestergarn zur Verwendung als Kronensicherungs-Mittel vorgeschlagen wird.

Zum Stand der Technik ist weiterhin das deutsche Gebrauchsmuster G 92 11 619.1 zu nennen, das eine Sicherheitseinrichtung für einen Baum beschreibt, die aus einem Haltegurt mit Schlaufen, durch die ein Seil geführt werden kann und einem in den Haltegurt integrierten Befestigungsgurt besteht, wobei der Befestigungsgurt so elastisch ausgebildet ist, dass er sich bei Zuwachs des betreffenden Baumabschnittes entsprechend dehnt, ohne in die Rinde einzuschneiden oder einzuwachsen.

Ferner wird zum Stand der Technik auf eine Veröffentlichung von Günter Sinn mit dem Titel "Neue Erkenntnisse zur Baumpflege und Baumsanierung", publiziert in der Fachzeitschrift "Das Gartenamt" 40 (1991, Februar, Seiten 101 bis 104) hingewiesen, in welcher ebenfalls das bereits oben zum Stand der Technik genannte Kronensicherungssystem beschrieben ist, das aus einem textilen Gurtband aus synthetischen Fasern (Polyester), die weitgehend licht- und wärmestabil sowie hochverrottungsfest sind und speziellen Gurtschnallen besteht.

Der vorliegenden Erfindung liegt nun die Aufgabe zu Grunde, in mindestens zweifacher Hinsicht die Gurtbänder des Standes der Technik sprunghaft zu verbessern und zwar einmal hinsichtlich deren Auffälligkeit in den pflanzlichen Strukturen, insbesondere in den Baumkronen durch sprunghafte Verringerung ihrer Breite bei gleichbleibenden mechanischen und insbesondere kinetischen Eigenschaften und zum zweiten eine sprunghafte Verbesserung der elastischen Nachgiebigkeit unter Vermeidung des in der Fachwelt als Karateeffekt bezeichneten ruckartigen Abbremsens der Astschwingungen.

Ferner soll ein Durchhang und damit ein Flattern der Gurtbänder vermieden werden.

Diese Nachteile des Standes der Technik werden durch den Vorschlag vorliegender Erfindung unter Erreichung von Vorteilen vermieden bzw. überwunden.

Erfindungsgemäß wird nämlich vorgeschlagen, dass das Gurtband zur Sicherung von Bäumen und sonstigen pflanzlichen Strukturen, in Gestalt einer Wendel ausgebildet ist, die aus Fasern besteht.

Es ist bevorzugtermaßen mit mindestens einer Schnalle kombiniert. Das Gurtband besteht vorzugsweise aus Textilmaterial und insbesondere aus Polyesterfasern.

Erfindungsgemäß kann das Gurtband ferner nach einer bevorzugten Ausführungsform mit seine Elastizität, d.h. Rückstellkraft erhöhenden Appretur versehen sein.

Es kann insbesondere mit einem elastischen Überzug versehen sein, der vorzugsweise aus einem Gummimaterial besteht.

Das erfindungsgemäße wendelförmige Gurtband kann als "Dynamik-Gurtseil" bezeichnet werden; die Breite dieses Gurtbands ist im Vergleich zu Gurtbändern des Standes der Technik wesentlich reduziert, wobei bei äußerer Belastung die Wendelform einen zusätzlichen Federweg ergibt. Das gewendelte Gurtband kann auf Grund der Systemdehnung, statt mit einem Durchhang, wie bei den Gurtbändern des Standes der Technik, mit handfester Spannung eingebaut werden. Das unerwünschte Flattern im Wind ist damit ausgeschlossen.

Umfangreiche Prüfungen haben ergeben, dass dabei die Bruchfestigkeit der Gurtbandwendel ebenso groß ist wie die Bruchfestigkeit der konventionellen Gurtbänder.

Es ist auch möglich, konventionelle Gurtbänder teilweise mit dem erfindungsgemäßen wendelförmigen Gurtband in der Weise zu kombinieren, dass bestimmte Abschnitte der konventionellen Gurtbänder, beispielsweise deren Mittelstücke und/oder deren Endstücke vor den Schlaufen mit dem erfindungsgemäßen Gurtband versehen werden, d.h. dass dieses Teile der konventionellen Gurtbänder ersetzt.

Es hat sich auch gezeigt, dass auf Zusatzelemente wie Ruckdämpfer, Dehnungsteile, Spreizbänder und Scheuerschutz verzichtet werden kann, weil die erfindungsgemäße Wendelung des Gurtbandes dehnbar ist und ruckdämpfend wirkt und weil das Gurtband im Schlaufenbereich am Baum oder sonstigen pflanzlichen Strukturen weiterhin als Band anliegt.

Für die vom Regelfall abweichende Arretierung des Systems in einer bestimmten Höhe am Baum, zum Beispiel beim waagrechten Einbau zwischen weitgehend astlosen Stämmlingen, kann ein dünnes Halteseil oder Halteband verwendet werden, das mit loser Schlaufe am nächsten darüber liegenden Seitenast befestigt und mit einer Gurtbandschlaufe verbunden ist.

Auch die Schnalle kann aus einem hochwertigen Kunststoffmaterial bestehen.

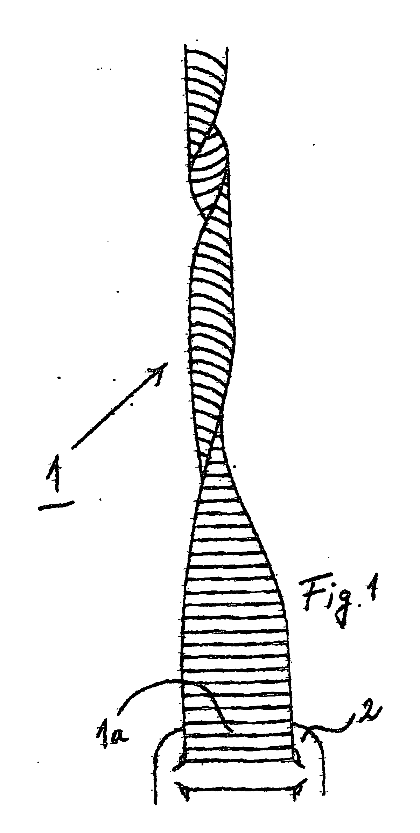

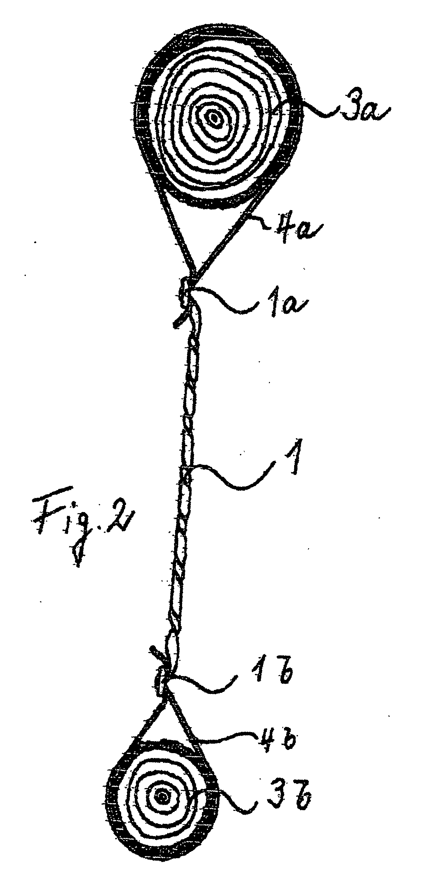

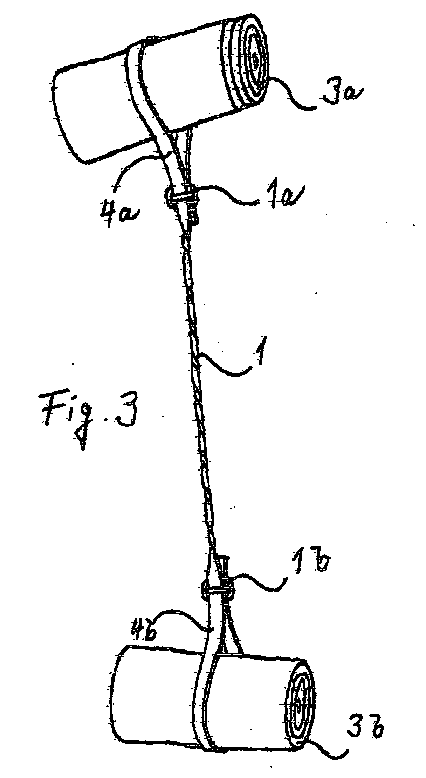

Das Wesen vorliegender Erfindung wird im folgenden im einzelnen an Hand der beiliegenden Figuren 1 - 3, die bevorzugte Ausführungsformen darstellen, weiterhin erläutert.

In allen Figuren sind die gleichen Elemente mit den gleichen Bezugsziffern bezeichnet.

Figur 1 zeigt (in abgebrochener Darstellung) das erfindungsgemäße Gurtband in Gestalt der Wendel 1. Das Ende 1a des Gurtbands ist auf an sich bekannte Art und Weise in die Schnalle 2 eingeführt.

In Figur 2 ist die Verbindung zweiter im Querschnitt dargestellten Baumstämme 3a und 3b mittels des erfindungsgemäßen wendelförmigen Gurtbands 1 dargestellt, an dessen Enden die Schnallen 1a und 1b auf an sich bekannte Art und Weise über die die Baumstämme 3a und 3b umschlingenden Stützschlaufen 4a und 4b erfolgt; im vorliegenden Fall wird das kleinere Gehölz 3b vom größeren Gehölz 3a gesichert.

In Figur 3 ist eine perspektivische Ansicht der Ausführungsform gemäß Figur 2 dargestellt.

## Patentansprüche

1. Gurtband zur Sicherung von Bäumen und sonstigen pflanzlichen Strukturen,
**dadurch gekennzeichnet,**
**dass** das Gurtband in Gestalt einer Wendel (1) ausgebildet ist, die aus Fasern besteht.

2. Gurtband nach Anspruch 1,
**dadurch gekennzeichnet,**
**dass** es an seinen Enden mit Schnallen (1a; 1b) kombiniert ist.

3. Gurtband nach Anspruch 1 - 2,
**dadurch gekennzeichnet,**
**dass** es aus Textilmaterial besteht.

4. Gurtband nach Anspruch 3,
**dadurch gekennzeichnet,**
**dass** es aus Polyesterfasern besteht.

5. Gurtband nach Anspruch 1 - 4,
**dadurch gekennzeichnet,**
**dass** es mit einer die Elastizität erhöhenden Appretur versehen ist.

6. Gurtband nach Anspruch 1 - 4,
**dadurch gekennzeichnet,**
**dass** es mit einem elastischen Überzug versehen ist.

7. Gurtband nach Anspruch 6,
**dadurch gekennzeichnet,**
**dass** der elastische Überzug des Gurtbands aus Gummimaterial besteht.

## Claims

1. Webbing for securing trees and other plants,
**characterised in that** the webbing is shaped like a helix (1).

2. Webbing according to claim 1,
**characterised in that** it is combined with buckles (1a; 1b) at either end.

3. Webbing according to claim 1 - 2,
**characterised in that** it consists of textile fabric.

4. Webbing according to claim 3,
**characterised in that** it consists of polyester fibres.

5. Webbing according to claim 1 - 4,
**characterised in that** its finish increases elasticity.

6. Webbing according to claim 1- 4,
**characterised in that** the covering is elastic.

7. Webbing according to claim 6,
**characterised in that** the webbing's elastic covering is made of rubber.

## Revendications

1. Sangle pour protéger des arbres ou autres plantes,
**caractérisée en ce que**
la sangle a la forme d'une hélice.

2. Sangle selon la revendication 1,
**caractérisée en ce que**
sur les deux bouts de la sangle des boucles (1a ; 1b) peuvent être fixées.

3. Sangle selon la revendication 1 - 2,
**caractérisée en ce qu'**elle est constituée de matériau textile.

4. Sangle selon la revendication 3,
**caractérisée en ce qu'**elle est constituée de fibres de polyester.

5. Sangle selon la revendication 1 - 4,
**caractérisée en ce qu'**elle est pourvue d'un apprêt qui augmente l'élasticité.

6. Sangle selon la revendication 1 - 4,
**caractérisée en ce qu'**elle est revêtue d'une couche élastique.

7. Sangle selon la revendication 6,
**caractérisée en ce que** la couche élastique est constituée de caoutchouc.
